(19) Europäisches Patentamt
European Patent Office
Office européen des brevets

(11) **EP 4 534 725 A1**

(12) **EUROPEAN PATENT APPLICATION**
published in accordance with Art. 153(4) EPC

(43) Date of publication:
**09.04.2025  Bulletin 2025/15**

(21) Application number: **23815603.8**

(22) Date of filing: **17.04.2023**

(51) International Patent Classification (IPC):
**C25B 1/02** (2006.01)   **C25B 1/04** (2021.01)
**C25B 9/00** (2021.01)   **C25B 15/023** (2021.01)

(52) Cooperative Patent Classification (CPC):
**C25B 1/02; C25B 1/04; C25B 9/00; C25B 15/023**

(86) International application number:
**PCT/JP2023/015261**

(87) International publication number:
**WO 2023/233842 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **02.06.2022  JP 2022090100**

(71) Applicant: **Panasonic Intellectual Property Management Co., Ltd.**
**Kadoma-shi, Osaka 571-0057 (JP)**

(72) Inventors:
• YOROZUYA, Misa
  **Kadoma-shi, Osaka 571-0057 (JP)**
• NAKAUE, Takayuki
  **Kadoma-shi, Osaka 571-0057 (JP)**
• SAKAI, Osamu
  **Kadoma-shi, Osaka 571-0057 (JP)**
• KANI, Yukimune
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **COMPRESSION DEVICE, OPERATION METHOD FOR COMPRESSION DEVICE, AND MANUFACTURING METHOD FOR COMPRESSION DEVICE**

(57)     A compression apparatus according to an aspect of the present disclosure includes: a compressor that generates compressed hydrogen at a cathode by an electrolysis of water or by oxidation and reduction of hydrogen generated by applying a voltage between an anode and the cathode having flexural rigidity lower than flexural rigidity of the anode; and a controller that, in startup or in shutdown, determines an abnormality based on a gas flow rate at an exit of the anode or a pressure at the cathode after supplying a testing gas from a testing gas supplier to the cathode.

FIG. 1

## Description

Technical Field

The present disclosure relates to a compression apparatus, a method of operating a compression apparatus, and a method of manufacturing a compression apparatus.

Background Art

In recent years, hydrogen has been drawing attention as a clean alternative energy source that may replace fossil fuels in light of environmental issues such as global warming and energy issues such as depletion of petroleum resources. Hydrogen basically generates only water even when combusted, and emits no carbon dioxide that causes global warming or very little nitrogen oxides and the like, and is therefore expected as the clean energy. Meanwhile, there are fuel cells serving as devices that use hydrogen highly efficiently as a fuel, for example, and developments and diffusion thereof have been in progress for automotive power sources and for home private power generation.

For example, hydrogen used as a fuel for a fuel cell vehicle is generally stored in an in-vehicle hydrogen tank in a state of high pressure compressed to several tens of megapascals. Then, hydrogen at the high pressure as mentioned above is generally obtained by compressing hydrogen at a low pressure (an ordinary pressure) by using a mechanical compression apparatus.

Meanwhile, in the forthcoming hydrogen society, there is a demand for technological developments for enabling storage of hydrogen at a high density and transportation or utilization thereof in a small volume and at a low cost in addition to production of hydrogen. In particular, it is necessary to construct hydrogen supply infrastructures in order to foster the diffusion of fuel cells, and various ideas for production, purification, and high-density storage of high-purity hydrogen have been proposed in order to stably supply hydrogen.

For example, PTL 1 proposes an electrochemical cell for generating compressed hydrogen by applying a desired voltage between an anode and a cathode disposed while interposing an electrolytic film therebetween and causing hydrogen in hydrogen-containing gas supplied to the anode to move to the cathode, in which rigidity of a flow structure (a gas diffusion layer) of the cathode is set lower than rigidity of a flow structure (a gas diffusion layer) of the anode.

Citation List

Patent Literature

PTL 1: Japanese Patent No. 6360061

Summary of Invention

Technical Problem

As an example, an object of the present disclosure is to provide a compression apparatus, a method of operating a compression apparatus, and a method of manufacturing a compression apparatus, which enable determination of an abnormality of a compressor more appropriately than the related art.

Solution to Problem

A compression apparatus according to an aspect of the present disclosure includes: a compressor that generates compressed hydrogen at a cathode by an electrolysis of water or by oxidation and reduction of hydrogen generated by applying a voltage between an anode and the cathode having flexural rigidity lower than flexural rigidity of the anode; and a controller that, in startup or in shutdown, determines an abnormality based on a gas flow rate at an exit of the anode or a pressure at the cathode after supplying a testing gas from a testing gas supplier to the cathode.

A method of operating a compression apparatus according to an aspect of the present disclosure includes: generating compressed hydrogen at a cathode by an electrolysis of water or by oxidation and reduction of hydrogen generated by applying a voltage between an anode and the cathode having flexural rigidity lower than flexural rigidity of the anode; and in startup or in shutdown, supplying a testing gas to the cathode and determining an abnormality based on a gas flow rate at an exit of the anode or a pressure at the cathode after supplying the testing gas.

A method of manufacturing a compression apparatus according to an aspect of the present disclosure includes: fabricating a laminated body by laminating electrochemical cells each including an electrolytic film, an anode provided to one of principal surfaces of the electrolytic film, and a cathode provided to another one of the principal surfaces of the electrolytic film; and supplying a testing gas to the cathode and determining an abnormality based on a gas flow rate at an exit of the anode or a pressure at the cathode after supplying the testing gas.

Advantageous Effects of Invention

A compression apparatus, a method of operating a compression apparatus, and a method of manufacturing a compression apparatus according to an aspect of the present disclosure can exert an effect that enables determination of an abnormality of a compressor more appropriately than the related art.

Brief Description of Drawings

[Fig. 1] Fig. 1 is a diagram illustrating an example of a compression apparatus of a first embodiment.
[Fig. 2] Fig. 2 is a diagram illustrating an example of a compression apparatus of a second embodiment.
[Fig. 3] Fig. 3 is a flowchart illustrating an example of an operation of the compression apparatus of the second embodiment.
[Fig. 4] Fig. 4 is a diagram for explaining the example of the operation of the compression apparatus of the second embodiment.
[Fig. 5] Fig. 5 is a diagram illustrating an example of a compression apparatus of a modified example of the second embodiment.
[Fig. 6] Fig. 6 is a diagram illustrating an example of a compression apparatus of a third embodiment.
[Fig. 7] Fig. 7 is a flowchart illustrating an example of an operation of the compression apparatus of the third embodiment.
[Fig. 8] Fig. 8 is a diagram for explaining the example of the operation of the compression apparatus of the third embodiment.
[Fig. 9] Fig. 9 is a flowchart illustrating an example of an operation of a compression apparatus according to a first modified example of the third embodiment.
[Fig. 10] Fig. 10 is a flowchart illustrating an example of an operation of a compression apparatus according to a second modified example of the third embodiment.
[Fig. 11] Fig. 11 is a diagram for explaining a method of manufacturing a compression apparatus of a fourth embodiment.

Description of Embodiments

Regarding the electrochemical cell to generate compressed hydrogen of PTL 1, this document discloses a concept of setting the rigidity of the cathode lower than the rigidity of the anode as mentioned above. However, the PTL 1 does not fully investigate an appropriate method of detecting an abnormality in an electrochemical cell such as breakage of an electrolytic film.
As a result of intensive studies, the inventors of the present disclosure have found out that breakage of an electrolytic film can be suppressed more appropriately in an inspection by supplying a testing gas to a cathode rather than to an anode in a case of conducting a leakage inspection between the anode and the cathode by supplying the testing gas to the electrochemical cell in order to detect the abnormality.
This is because a supply pressure of the testing gas is relatively high in order to facilitate detection of the leakage, and the electrolytic film is prone to breakage if the testing gas is supplied to the anode as the electrolytic film may fall to the cathode side having flexural rigidity lower than that of the anode.
A compression apparatus according to a first aspect of the present disclosure includes: a compressor that generates compressed hydrogen at a cathode by an electrolysis of water or by oxidation and reduction of hydrogen generated by applying a voltage between an anode and the cathode having flexural rigidity lower than flexural rigidity of the anode; and a controller that, in startup or in shutdown, determines an abnormality based on a gas flow rate at an exit of the anode or a pressure at the cathode after supplying a testing gas from a testing gas supplier to the cathode.
According to the above-described configuration, the compression apparatus of the present aspect can determine the abnormality of the compressor more appropriately than the related art.
To be more precise, an amount of the testing gas that leaks out of the cathode to the anode through the electrolytic film after supplying the testing gas from the testing gas supplier to the cathode is thought to vary depending on a state of breakage of the electrolytic film. Accordingly, the abnormality of the compressor can be appropriately determined by using the gas flow rate at the exit of the anode or the pressure at the cathode after supplying the testing gas from the testing gas supplier to the cathode.

Here, if the high-pressure testing gas is supplied from the testing gas supplier to the anode, the electrolytic film is more susceptible to breakage due to a deformation of the electrolytic film as compared to the case of supplying the same testing gas to the cathode. This is because the flexural rigidity of the cathode is lower than the flexural rigidity of the anode as described above.

Accordingly, the compression apparatus of the present aspect can reduce a possibility to induce breakage of the electrolytic film in the course of the inspection of the compressor as compared to the case of supplying the same testing gas to the anode by checking for the presence of breakage of the electrolytic film by using the gas flow rate at the exit of the anode or the pressure at the cathode after supplying the testing gas from the testing gas supplier to the cathode.

According to a compression apparatus of a second aspect of the present disclosure, in the compression apparatus of the first aspect, a supply pressure of the testing gas from the testing gas supplier may be higher than a supply pressure of an anode fluid in a generating operation of compressed hydrogen.

According to the above-described configuration, the compression apparatus of the present aspect performs control such that the supply pressure of the testing gas from the testing gas supplier becomes higher than the supply pressure of the anode fluid in the operation to generate compressed hydrogen. Thus, it is easier to determine the abnormality of the compressor as compared to the case of not carrying out the above-described control. This is because the change in gas flow rate at the exit of the anode or the change in pressure at the cathode is more prominently visible in the abnormality due to the breakage of the electrolytic film as the supply pressure of the testing gas is higher than the supply pressure of the anode fluid.

According to a compression apparatus of a third aspect of the present disclosure, in the compression apparatus of the first or second aspect, a supply pressure of the testing gas from the testing gas supplier may be higher than an upper limit of a supply pressure of an anode fluid in a generating operation of compressed hydrogen.

According to the above-described configuration, the compression apparatus of the present aspect performs control such that the supply pressure of the testing gas from the testing gas supplier becomes higher than the upper limit of the supply pressure of the anode fluid in the operation to generate compressed hydrogen. Thus, it is easier to determine the abnormality of the compressor as compared to the case of not carrying out the above-described control. This is because the change in gas flow rate at the exit of the anode or the change in pressure at the cathode is more prominently visible in the abnormality due to the breakage of the electrolytic film as the supply pressure of the testing gas is higher than the upper limit of the supply pressure of the anode fluid.

According to a compression apparatus of a fourth aspect of the present disclosure, in the compression apparatus of any one of the first to third aspects, flexural rigidity of a cathode gas diffusion layer included in the cathode may be lower than flexural rigidity of an anode gas diffusion layer included in the anode.

According to a compression apparatus of a fifth aspect of the present disclosure, in the compression apparatus of any one of the first to fourth aspects, the controller may determine the abnormality when the gas flow rate at the exit of the anode after supplying the testing gas to the cathode is greater than or equal to a first threshold.

The gas flow rate at the exit of the anode after supplying the testing gas to the cathode in an abnormal case with breakage of the electrolytic film is more likely to be larger than the above-mentioned gas flow rate in a normal case without breakage of the electrolytic film. Accordingly, the compression apparatus of the present aspect can appropriately determine the abnormality of the compressor based on the comparison between the gas flow rate at the exit of the anode after supplying the testing gas to the cathode and the first threshold by setting the first threshold to a desired value.

According to a compression apparatus of a sixth aspect of the present disclosure, in the compression apparatus of any one of the first to fifth aspects, the controller may determine the abnormality when the pressure at the cathode after supplying the testing gas to the cathode is less than or equal to a second threshold.

The pressure at the cathode after supplying the testing gas to the cathode in the abnormal case with breakage of the electrolytic film is more likely to be smaller than the above-mentioned pressure at the cathode in the normal case without breakage of the electrolytic film. Accordingly, the compression apparatus of the present aspect can appropriately determine the abnormality of the compressor based on the comparison between the pressure at the cathode after supplying the testing gas to the cathode and the second threshold by setting the second threshold to a desired value.

According to a compression apparatus of a seventh aspect of the present disclosure, in the compression apparatus of any one of the first to sixth aspects, the controller may determine the abnormality when reduction in pressure at the cathode after supplying the testing gas to the cathode is greater than or equal to a third threshold.

The reduction in pressure at the cathode after supplying the testing gas to the cathode in the abnormal case with breakage of the electrolytic film is more likely to be larger than the reduction in pressure at the cathode in the normal case without breakage of the electrolytic film. Accordingly, the compression apparatus of the present aspect can appropriately determine the abnormality of the compressor based on the comparison between the reduction in pressure at the cathode after supplying the testing gas to the cathode and the third threshold by setting the third threshold to a desired value.

According to a compression apparatus of an eighth aspect of the present disclosure, in the compression apparatus of any one of the first to seventh aspects, the controller may determine the abnormality when a rate of reduction in pressure at the cathode after supplying the testing gas to the cathode is greater than or equal to a fourth threshold.

The rate of reduction in pressure at the cathode after supplying the testing gas to the cathode in the abnormal case with breakage of the electrolytic film is more likely to be larger than the rate of reduction in pressure at the cathode in the normal case without breakage of the electrolytic film. Accordingly, the compression apparatus of the present aspect can appropriately determine the abnormality of the compressor based on the comparison between the rate of reduction in pressure at the cathode after supplying the testing gas to the cathode with the fourth threshold by setting the fourth threshold to a desired value.

A method of operating a compression apparatus according to a ninth aspect of the present disclosure includes: generating compressed hydrogen at a cathode by an electrolysis of water or by oxidation and reduction of hydrogen generated by applying a voltage between an anode and the cathode having flexural rigidity lower than flexural rigidity of the anode; and in startup or in shutdown, supplying a testing gas to the cathode and determining an abnormality based on a gas flow rate at an exit of the anode or a pressure at the cathode after supplying the testing gas

The operation and effects exerted by the method of operating a compression apparatus of the present aspect are the same as the operation and effects exerted by the compression apparatus of the first aspect, and explanations will therefore be omitted.

A method of manufacturing a compression apparatus according to a tenth aspect of the present disclosure includes: fabricating a laminated body by laminating electrochemical cells each including an electrolytic film, an anode provided to one of principal surfaces of the electrolytic film, and a cathode provided to another one of the principal surfaces of the electrolytic film; and supplying a testing gas to the cathode and determining an abnormality based on a gas flow rate at an exit of the anode or a pressure at the cathode after supplying the testing gas.

The operation and effects exerted by the method of manufacturing a compression apparatus of the present aspect are the same as the operation and effects exerted by the compression apparatus of the first aspect, and explanations will therefore be omitted.

Embodiments of the present disclosure will be described below with reference to the accompanying drawings. The embodiments described below each represent an example of the respective aspects mentioned above. Accordingly, numerical values, shapes, materials, constituents, layout positions and modes of connection of the constituents, and the like depicted below are mere examples and are not intended to restrict the respective aspects mentioned above unless specifically defined in the claims. Meanwhile, of the following constituents, a constituent not defined in an independent claim that represents the highest conception of the present aspect will be described as an optional constituent. In the meantime, explanations of those in the drawings denoted by the same reference signs may be omitted as appropriate. The drawings schematically illustrate the respective constituents in order to facilitate the understandings, and shapes, dimensional ratios, and the like thereof may be displayed inaccurately in some cases. In the meantime, regarding an operation, the order of respective steps and the like are modifiable as needed. Moreover, other publicly known steps can be added thereto.

(First embodiment)

[Apparatus configuration]

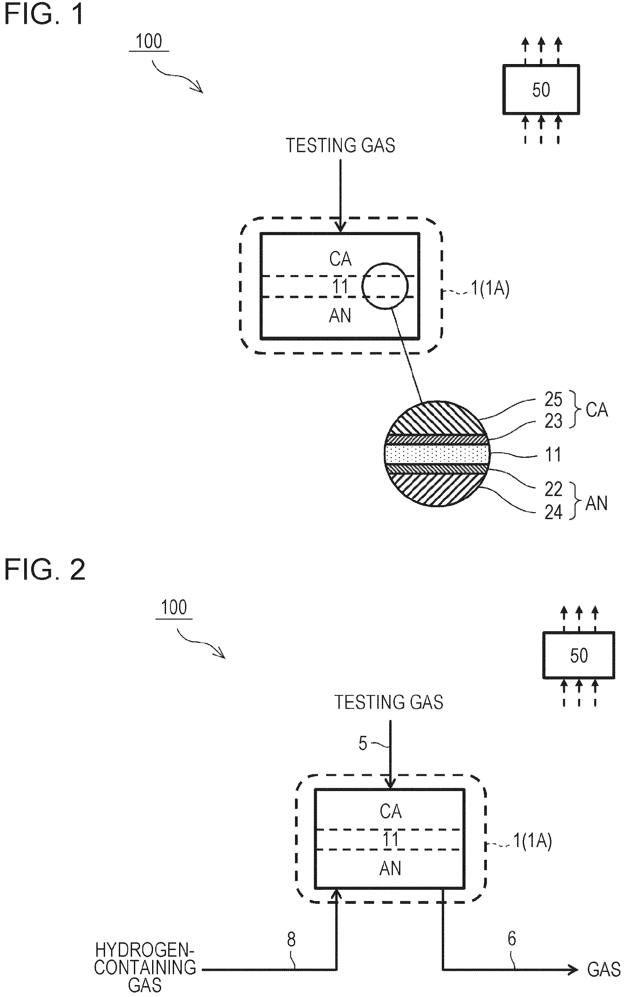

Fig. 1 is a diagram illustrating an example of a compression apparatus of a first embodiment.

In the example illustrated in Fig. 1, a compression apparatus 100 of the present embodiment includes a compressor 1 and a controller 50. The compressor 1 includes an ion-conducting electrolytic film 11, an anode AN, and a cathode CA.

The compressor 1 is a device configured to generate compressed hydrogen at the cathode CA by an electrolysis of water or by oxidation and reduction of hydrogen generated by applying a voltage between the anode AN and the cathode CA having flexural rigidity lower than that of the anode AN.

Here, an electrochemical hydrogen pump can be cited as an example of the compressor 1 in which compressed hydrogen is generated at the cathode CA by oxidation and reduction of hydrogen. In this case, a hydrogen-containing gas is supplied to the anode AN as an anode fluid in a generating operation of compressed hydrogen. That is to say, in the electrochemical hydrogen pump, the voltage is applied between the anode AN and the cathode CA provided while interposing the electrolytic film 11 therebetween, whereby hydrogen in the hydrogen-containing gas supplied to the anode AN is oxidized to generate protons. These protons move to the cathode CA through the electrolytic film and are reduced, whereby compressed hydrogen is generated at the cathode CA. Here, the aforementioned hydrogen-containing gas may be hydrogen gas generated by the electrolysis of water or reformed gas generated by a reforming reaction of hydrocarbon gas.

Meanwhile, a water electrolysis apparatus of either a PEM type or an AEM (anion exchange membrane) type can be cited as an example of the compressor 1 that generates compressed hydrogen at the cathode CA by the electrolysis of water. In this case, water is supplied to the anode AN as the anode fluid in the generating operation of compressed hydrogen. Nonetheless, water may be supplied to the cathode CA in the case of the water electrolysis apparatus of the AEM type. That is to say, the water electrolysis apparatus is an apparatus that generates oxygen at the anode AN and generates hydrogen at the cathode CA by applying the voltage between the anode AN and the cathode CA provided while interposing the electrolytic film 11 therebetween. In this instance, a proton exchange membrane that transmits protons ($H^+$) is used in the water electrolysis apparatus of the PEM type while an anion exchange membrane that transmits anions ($OH^-$) is used in the water electrolysis apparatus of the AEM type.

Now, a configuration and an operation of the compression apparatus 100 provided with an electrochemical hydrogen pump 1A representing an example of the compressor 1 will be described further in detail below with reference to Fig. 1.

The anode AN is provided at one of principal surfaces of the electrolytic film 11. The anode AN is an electrode that includes an anode catalyst layer 22 and an anode gas diffusion layer 24. The cathode CA is provided at another one of the principal surfaces of the electrolytic film 11. The cathode CA is an electrode that includes a cathode catalyst layer 23 and a cathode gas diffusion layer 25. Accordingly, the electrolytic film 11 is sandwiched by the anode AN and the cathode CA in such a way as to come into contact with the anode catalyst layer 22 and the cathode catalyst layer 23, respectively.

The electrolytic film 11 may have any configuration as long as the electrolytic film 11 is a film provided with proton conductivity. A fluorine-based polymer electrolytic film, a hydrocarbon-based electrolytic film, and the like can be cited as examples of the electrolytic film 11. To be more precise, Nafion (a registered trademark, manufactured by DuPont de Nemours, Inc.), Aciplex (a registered trademark, manufactured by Asahi Kasei Corporation), and the like can be used as the electrolytic film 11, for instance. However, the electrolytic film 11 is not limited thereto.

The anode catalyst layer 22 is provided at the one principal surface of the electrolytic film 11. The anode catalyst layer 22 contains carbon that can support a catalyst metal (such as platinum) in a dispersed state. However, the anode catalyst layer 22 is not limited thereto.

The cathode catalyst layer 23 is provided at the other principal surface of the electrolytic film 11. The cathode catalyst layer 23 contains carbon that can support a catalyst metal (such as platinum) in a dispersed state. However, the cathode catalyst layer 23 is not limited thereto.

Various methods can be cited as a method of preparing the catalyst in both the cathode catalyst layer 23 and the anode catalyst layer 22. However, the preparing method is not limited to a particular method. For example, powder of graphite, carbon black, conductive activated carbon, and the like can be cited as examples of carbon-based powder. A method of causing a carbon carrier to support platinum or other catalyst metals is not limited to a particular method. For example, it is possible to employ a method such as powder mixing, liquid phase mixing, and the like. As for the latter method of liquid phase mixing, it is possible to cite methods like a method of dispersing a carrier such as carbon into a colloidal liquid of a catalytic component and causing the carrier to adsorb the colloidal liquid. A state of support of the catalyst metal such as platinum onto the carbon carrier is not limited to a particular state. For example, the catalyst metal may be formed into fine particles and supported by the carrier in a highly dispersed state.

The cathode gas diffusion layer 25 is provided on the cathode catalyst layer 23. The cathode gas diffusion layer 25 is formed from a porous material and provided with electric conductivity and gas diffusiveness. The cathode gas diffusion layer 25 is preferably provided with elasticity so as to appropriately follow displacement and deformation occurring due to a difference in pressure between the cathode CA and the anode AN in operation of the electrochemical hydrogen pump 1A. A carbon fiber sintered body and the like can be used as a base material of the cathode gas diffusion layer 25, for example. However, the base material is not limited thereto.

The anode gas diffusion layer 24 is provided on the anode catalyst layer 22. The anode gas diffusion layer 24 is formed from a porous material and provided with electric conductivity and gas diffusiveness. The anode gas diffusion layer 24 is preferably provided with rigidity enough to withstand press of the electrolytic film 11 attributed to the aforementioned difference in pressure in operation of the electrochemical hydrogen pump 1A. A carbon particle sintered body, a titanium sintered body, and the like can be used as a base material of the anode gas diffusion layer 24, for example. However, the base material is not limited thereto.

As described above, in the electrochemical hydrogen pump 1A of the present embodiment, flexural rigidity of the cathode gas diffusion layer 25 included in the cathode CA is lower than flexural rigidity of the anode gas diffusion layer 24 included in the anode

AN.

In the aforementioned electrochemical hydrogen pump 1A, hydrogen in the hydrogen-containing gas supplied to the anode AN moves to the cathode CA by applying the voltage between the anode AN and the cathode CA as described above, whereby compressed hydrogen is generated at the cathode CA. Here, this voltage may be applied from a not-illustrated voltage applier.

The voltage applier may have any configuration as long as the voltage applier can apply the voltage between the anode AN and the cathode CA. A DC/DC converter, an AC/DC converter, and the like can be cited as examples of the voltage applier. The DC/DC converter is used in the case where the voltage applier is coupled to a direct-current power supply such as a solar cell, a fuel cell, a battery, and the like. The AC/DC converter is used in the case where the voltage applier is coupled to an alternating-current power supply such as a commercial power supply. Meanwhile, the voltage applier may be an electric power-type power supply with which the voltage to be applied between the anode AN and the cathode CA and a current flowing between the anode AN and the cathode CA are adjusted such that electric power supplied to electrochemical cells in the electrochemical hydrogen pump 1A is set to a given set value, for example.

The controller 50 determines an abnormality in the startup or in the shutdown based on a gas flow rate at an exit of the anode AN or a pressure at the cathode CA after supplying a testing gas from a testing gas supplier to the cathode CA. Meanwhile, the controller 50 may control the entire operation of the compression apparatus 100.

Here, the "in shutdown" means a point after shutdown of supply of a cathode gas containing compressed hydrogen from the cathode CA of the electrochemical hydrogen pump 1A to a demander of hydrogen (not illustrated). Alternatively, the "in shutdown" may be a point after shutdown of a compressing operation to generate compressed hydrogen to be supplied to the hydrogen demander.

The "in startup" means a point of a preparatory operation (an activating operation) for starting the compressing operation of the compression apparatus 100. Here, the "startup" of the compression apparatus 100 may begin at the timing to input an appropriate startup signal to the controller 50. In the meantime, when the "startup" of the compression apparatus 100 is completed, the compressing operation of the compression apparatus 100 is initiated.

Meanwhile, the mode to "determine an abnormality based on a gas flow rate at an exit of the anode AN after supplying a testing gas from a testing gas supplier to the cathode CA" includes any aspects as long as it is an aspect of determining an abnormality by using the gas flow rate at the exit of the anode AN after supplying the testing gas from the testing gas supplier to the cathode CA. For example, this may be a mode of determination based on a value of the gas flow rate itself at the exit of the anode AN after supplying the testing gas from the testing gas supplier to the cathode CA, or a mode of determination based on a change in gas flow rate value at the exit of the anode AN after supplying the testing gas from the testing gas supplier to the cathode CA. Alternatively, this may be a rate of change (a derivative value) in gas flow rate value at the exit of the anode AN after supplying the testing gas from the testing gas supplier to the cathode CA.

In the meantime, the mode to "determine an abnormality based on a pressure at the cathode CA after supplying a testing gas from a testing gas supplier to the cathode CA" includes any aspects as long as it is an aspect of determining an abnormality by using the exit of the anode AN after supplying the testing gas from the testing gas supplier to the cathode CA. For example, this may be a mode of determination based on a value of the pressure at the cathode CA itself after supplying the testing gas from the testing gas supplier to the cathode CA, or a mode of determination based on a change in pressure value at the cathode CA after supplying the testing gas from the testing gas supplier to the cathode CA. Alternatively, this may be a rate of change (a derivative value) in pressure value at the cathode CA after supplying the testing gas from the testing gas supplier to the cathode CA.

A hydrogen reservoir, a fuel cell, hydrogen infrastructure piping, and the like can be cited as examples of the aforementioned hydrogen demander. A dispenser, a hydrogen cylinder, and the like installed in a hydrogen station can be cited as examples of the hydrogen reservoir.

The controller 50 includes an arithmetic circuit (not illustrated) and a storage circuit (not illustrated) that stores a control program, for example. An MPU, a CPU, and the like can be cited as examples of the arithmetic circuit. A memory and the like can be cited as examples of the storage circuit. The controller 50 may be formed from a single controller that conducts centralized control or formed from multiple controllers that conduct decentralized control in cooperation with each other.

Here, although not illustrated in the drawings, members and instruments necessary for a hydrogen compressing operation by the compression apparatus 100 are provided as appropriate.

For example, in the electrochemical hydrogen pump 1A, a pair of separators may sandwich the anode AN and the cathode CA from out sides thereof, respectively. In this case, the separator to come into contact with the anode AN is a conductive plate-like member for supplying the hydrogen-containing gas to the anode AN. This plate-like member includes a serpentine gas flow channel on which the hydrogen-containing gas to be supplied to the anode AN flows. The separator to come into contact with the cathode CA is a conductive plate-like member for outputting hydrogen from the cathode CA. This plate-like member includes a gas flow channel on which the hydrogen outputted from the cathode CA flows.

Meanwhile, the electrochemical hydrogen pump 1A is usually provided with sealing members such as gaskets from both sides of electrochemical cells so as not to cause leakage of high-pressure hydrogen to outside, which are integrated and assembled together with the electrochemical cells of the electrochemical hydrogen pump 1A in advance. Then, the aforementioned separators for mechanically fixing these electrochemical cells and electrically coupling the adjacent electrochemical cells to each other in series are disposed on outer sides thereof.

A general lamination structure is realized by alternately lapping the electrochemical cells and the separators so as to laminate about 10 to 200 electrochemical cells, then sandwiching this laminated body (a stack) with end plates while interposing a current collecting plate and an insulating plate therebetween, and then tightening the two end plates with a fastener rod. Here, in order to supply an appropriate amount of the hydrogen-containing gas to each of the gas flow channels of the separators in this case, it is necessary to configure the respective separators such that appropriate pipelines therein are branched off into branched channels in a groove shape and downstream ends thereof are connected to end portions on one side of the respective gas flow channels of the separators. In the meantime, in order to discharge an appropriate amount of the hydrogen-containing gas from each of the gas flow channels of the separators, it is necessary to configure the respective separators such that appropriate pipelines therein are branched off into branched channels in a groove shape and upstream ends thereof are connected to end portions on another side of the respective gas flow channels of the separators. Moreover, in order to discharge an appropriate amount of the high-pressure cathode gas from each of the cathodes of the separators, it is necessary to configure the respective separators such that appropriate pipelines therein are branched off into branched channels in a groove shape and upstream ends thereof are connected to the respective cathodes of the separators.

The aforementioned pipeline is referred to as a manifold. The manifold is formed from a band of through holes provided at appropriate locations of the members constituting the stack, for example.

Meanwhile, the compression apparatus 100 may be provided with a temperature detector that detects a temperature of each electrochemical cell, a temperature adjustor that adjusts the temperature of the electrochemical cell, a dew-point adjustor that adjusts a dew point of the hydrogen-containing gas to be supplied to the anode AN.

Note that the not-illustrated members and instruments mentioned above are exemplary and the present disclosure is not limited to these examples.

[Operation]

An example of the hydrogen compressing operation by the compression apparatus 100 will be described below with reference to the drawings. The following operation may be carried out, for example, by causing the arithmetic circuit of the controller 50 to read the control program out of the storage circuit of the controller 50. However, it is not always essential to carry out the following operation by using the controller 50. An operator may carry out part of the operation. The following example will describe a case of controlling the operation with the controller 50.

First, the hydrogen-containing gas at a low pressure and a high humidity is supplied to the anode AN of the electrochemical hydrogen pump 1A, and the voltage is fed from the voltage applier to the electrochemical hydrogen pump 1A. Then, hydrogen molecules are separated into protons and electrons in the anode catalyst layer 22 of the anode AN (Formula (1)). The protons are transmitted in the electrolytic film 11 and move to the cathode catalyst layer 23. The electrons move to the cathode catalyst layer 23 through the voltage applier.

Then, the hydrogen molecules are generated in the cathode catalyst layer 23 again (Formula (2)). Here, it is known that water in a predetermined amount accompanies the protons as electroosmotic water from the anode AN to the cathode CA when the protons move inside the electrolytic film 11.

In this instance, in the case where compressed hydrogen at the high pressure generated at the cathode CA of the electrochemical hydrogen pump 1A is supplied to a not-illustrated hydrogen reservoir through a not-illustrated cathode gas output flow channel, for example, it is possible to compress hydrogen ($H_2$) generated at the cathode CA while increasing a pressure loss of the cathode gas output flow channel by using a back pressure valve, a regulation valve (not illustrated), and the like provided to the cathode gas output flow channel. Here, an increase in pressure loss of the cathode gas output flow channel corresponds to reduction in opening degree of the back pressure valve or the regulation valve provided to the cathode gas output flow channel:

$$\text{Anode: } H_2 \text{ (low pressure)} \rightarrow 2H^+ + 2e^- \qquad \ldots(1);$$

and

$$\text{Cathode: } 2H^+ + 2e^- \rightarrow H_2 \text{ (high pressure)} \qquad \ldots(2).$$

Thus, the operation to generate compressed hydrogen is carried out by applying the voltage between the anode AN and the cathode CA provided in the compression apparatus 100 while interposing the electrolytic film 11 therebetween, thus causing hydrogen in the hydrogen-containing gas supplied to the anode AN to move to the cathode CA. The cathode gas containing the compressed hydrogen generated at the cathode CA is subjected to removal of moisture, impurities, and the like contained in the cathode gas, and is then temporarily stored in the hydrogen reservoir.

Next, the compressing operation of the compression apparatus 100 is shutdown. To be more precise, the supply of the cathode gas from the cathode CA of the electrochemical hydrogen pump 1A to the hydrogen reservoir is shutdown by closing the back pressure valve and the regulator valve provided to the cathode gas output flow channel, for example. Here, the cathode gas stored in the hydrogen reservoir may be supplied to a fuel cell and the like when appropriate.

Here, in the compression apparatus 100 of the present embodiment, an operation to supply the testing gas to the cathode CA in the startup or in the shutdown and to determine an abnormality based on the gas flow rate at the exit of the anode AN or the pressure at the cathode CA is carried out.

As described above, the compression apparatus 100 and the method of operating the compression apparatus 100 of the present embodiment can determine an abnormality of the electrochemical hydrogen pump 1A more appropriately than the related art.

To be more precise, an amount of the testing gas that leaks out of the cathode CA to the anode AN through the electrolytic film 11 after supplying the testing gas from the testing gas supplier to the cathode CA is thought to vary depending on a state of breakage of the electrolytic film 11. Accordingly, the abnormality of the electrochemical hydrogen pump 1A can be appropriately determined by using the gas flow rate at the exit of the anode AN or the pressure at the cathode CA after supplying the testing gas from the testing gas supplier to the cathode CA.

Here, if the high-pressure testing gas is supplied from the testing gas supplier to the anode AN, the electrolytic film 11 is more susceptible to breakage due to a deformation of the electrolytic film 11 as compared to the case of supplying the same testing gas to the cathode CA. This is because the flexural rigidity of the cathode CA is lower than the flexural rigidity of the anode AN as described above.

Accordingly, the compression apparatus 100 and the method of operating the compression apparatus 100 of the present embodiment can reduce a possibility to induce breakage of the electrolytic film 11 in the course of an inspection of the electrochemical hydrogen pump 1A as compared to the case of supplying the same testing gas to the anode AN by checking for the presence of breakage of the electrolytic film 11 by using the gas flow rate at the exit of the anode AN or the pressure at the cathode CA after supplying the testing gas from the testing gas supplier to the cathode CA.

(First example)

The compression apparatus 100 of the present example is the same as the compression apparatus 100 of the first embodiment except for a supply pressure of the testing gas to be described below.

In the electrochemical hydrogen pump 1A of the present example, the supply pressure of the testing gas from the testing gas supplier is higher than a supply pressure of the hydrogen-containing gas in the operation to generate compressed hydrogen. To be more precise, the supply pressure of the hydrogen-containing gas in the operation to generate compressed hydrogen is mostly set to an appropriate value less than or equal to about 0.1 MPaG (a gauge pressure), for example. Accordingly, the supply pressure of the testing gas is set to a value higher than about 0.1 MPaG, which is, for example, preferably at least greater than or equal to 0.2 MPaG, or more preferably greater than or equal to 0.4 MPaG.

Here, an upper limit of the supply pressure of the testing gas is equivalent to a designed upper limit of the cathode CA of the electrochemical hydrogen pump 1A, or in other words, a withstanding pressure of the electrochemical hydrogen pump 1A. A value that is several times as large as the upper limit of the cathode CA in the operation to generate compressed hydrogen is mostly set to the designed upper limit of the cathode CA, for example. A value around 40 MPaG can be represented as an example of the upper limit of the cathode CA in the operation to generate compressed hydrogen, for instance.

As described above, the electrochemical hydrogen pump 1A of the present example performs control such that the supply pressure of the testing gas from the testing gas supplier becomes higher than the supply pressure of the hydrogen-containing gas in the operation to generate compressed hydrogen. Thus, it is easier to determine the abnormality of the electrochemical hydrogen pump 1A as compared to the case of not carrying out the above-described control. This is because the change in gas flow rate at the exit of the anode AN or the change in pressure at the cathode CA is more prominently visible in the abnormality due to the breakage of the electrolytic film 11 as the supply pressure of the testing gas is higher than the supply pressure of the hydrogen-containing gas.

The compression apparatus 100 of the present example may be the same as the compression apparatus 100 of the first embodiment except for the above-described features.

(Second example)

The compression apparatus 100 of the present example is the same as the compression apparatus 100 of the first embodiment except for the supply pressure of the testing gas to be described below.

In the electrochemical hydrogen pump 1A of the present example, the supply pressure of the testing gas from the testing gas supplier is higher than an upper limit of the supply pressure of the hydrogen-containing gas in the operation to generate compressed hydrogen. To be more precise, the upper limit of the supply pressure of the hydrogen-containing gas in the operation to generate compressed hydrogen is mostly set to about 0.1 MPaG (a gauge pressure), for example. Accordingly, the supply pressure of the testing gas is set to a value higher than about 0.1 MPaG, which is preferably at least greater than or equal to 0.2 MPaG, or more preferably greater than or equal to 0.4 MPaG.

Here, the upper limit of the supply pressure of the testing gas is equivalent to the designed upper limit of the cathode CA of the electrochemical hydrogen pump 1A, or in other words, the withstanding pressure of the electrochemical hydrogen pump 1A. A value that is several times as large as the upper limit of the cathode CA in the operation to generate compressed hydrogen is mostly set to the designed upper limit of the cathode CA, for example. A value around 40 MPaG can be represented as an example of the upper limit of the cathode CA in the operation to generate compressed hydrogen, for instance.

As described above, the electrochemical hydrogen pump 1A of the present example performs control such that the supply pressure of the testing gas from the testing gas supplier becomes higher than the upper limit of the supply pressure of the hydrogen-containing gas in the operation to generate compressed hydrogen. Thus, it is easier to determine the abnormality of the electrochemical hydrogen pump 1A as compared to the case of not carrying out the above-described control. This is because the change in gas flow rate at the exit of the anode AN or the change in pressure at the cathode CA is more prominently visible in the abnormality due to the breakage of the electrolytic film 11 as the supply pressure of the testing gas is higher than the upper limit of the supply pressure of the hydrogen-containing gas.

The compression apparatus 100 of the present example may be the same as the compression apparatus 100 of the first embodiment as well as the first example of the first embodiment except for the above-described features.

(Second embodiment)

[Apparatus configuration]

Fig. 2 is a diagram illustrating an example of a compression apparatus of a second embodiment.

In the example illustrated in Fig. 2, the compression apparatus 100 of the present embodiment includes the electrochemical hydrogen pump 1A, a testing gas supply channel 5, an anode supply channel 8, an anode discharge channel 6, and the controller 50. Here, the configuration of the electrochemical hydrogen pump 1A is the same as that of the first embodiment and explanations will therefore be omitted.

The anode supply channel 8 is a flow channel for supplying the hydrogen-containing gas to the anode AN of the electrochemical hydrogen pump 1A.

A downstream end of the anode supply channel 8 may be connected to any location as long as it is the location communicating with the anode AN of the electrochemical hydrogen pump 1A. For example, the downstream end of the anode supply channel 8 may be connected to an entrance of the anode AN. To be more precise, in the case where the electrochemical hydrogen pump 1A includes the above-described stack, the downstream end of the anode supply channel 8 may communicate with the manifold for inputting the hydrogen-containing gas. An upstream end of the anode supply channel 8 may be connected to an appropriate hydrogen supply source, for example. A water electrolysis apparatus, a reformer, a hydrogen tank, and the like can be cited as examples of the hydrogen supply source.

The anode discharge channel 6 is a flow channel for discharging the redundant hydrogen-containing gas from the anode AN of the electrochemical hydrogen pump 1A.

An upstream end of the anode discharge channel 6 may be connected to any location as long as it is the location communicating with the anode AN of the electrochemical hydrogen pump 1A. For example, the upstream end of the anode discharge channel 6 may be connected to the exit of the anode AN. To be more precise, in the case where the electrochemical hydrogen pump 1A includes the above-described stack, the upstream end of the anode discharge channel 6 may communicate with the manifold for outputting the hydrogen-containing gas.

Here, in the compressing operation of the compression apparatus 100, the anode discharge channel 6 may be installed such that a downstream end of the anode discharge channel 6 is connected to an appropriate location of the anode supply channel 8, for example. In this way, the hydrogen-containing gas discharged from the anode AN can be appropriately recycled in the compressing operation of the compression apparatus 100.

On the other hand, in the case of supplying the testing gas from the testing gas supplier to the cathode CA, the downstream end of the anode discharge channel 6 may be connected to a flowmeter or a gas sensor, for example. For example, a gas detector (Model number: GP-1000) manufactured by Riken Keiki Co. Ltd. and the like can be used as the gas sensor. However, the gas sensor is not limited thereto.

The testing gas supply channel 5 is a flow channel for supplying the testing gas to the cathode CA of the electrochemical hydrogen pump 1A.

A downstream end of the testing gas supply channel 5 may be connected to any location as long as it is the location communicating with the cathode CA of the electrochemical hydrogen pump 1A. For example, the downstream end of the testing gas supply channel 5 may be connected to an exit of the cathode CA. To be more precise, in the case where the electrochemical hydrogen pump 1A includes the above-described stack, the downstream end of the testing gas supply channel 5 may communicate with the manifold for outputting the cathode gas. An upstream end of the testing gas supply channel 5 may be connected to the testing gas supplier, for example.

A testing gas supply source having a predetermined supply pressure, a pump communicating with this testing gas supply source, and the like can be cited as examples of the testing gas supplier.

A hydrogen gas cradle, a hydrogen gas cylinder, a helium gas cylinder, and the like can be cited as examples of the former testing gas supply source. The hydrogen gas cradle or the hydrogen gas cylinder can be used in the startup or in the shutdown of the compression apparatus 100, for instance. The helium gas cylinder can be used before factory shipment of the compression apparatus 100.

Here, the above-mentioned pump may be an external device provided outside of the compression apparatus 100, but can also be configured as an internal device provided to the compression apparatus 100. A specific example of this configuration will be described in a modified example.

The controller 50 determines an abnormality when a gas flow rate L at the exit of the anode AN after supplying the testing gas to the cathode CA is greater than or equal to a threshold A.

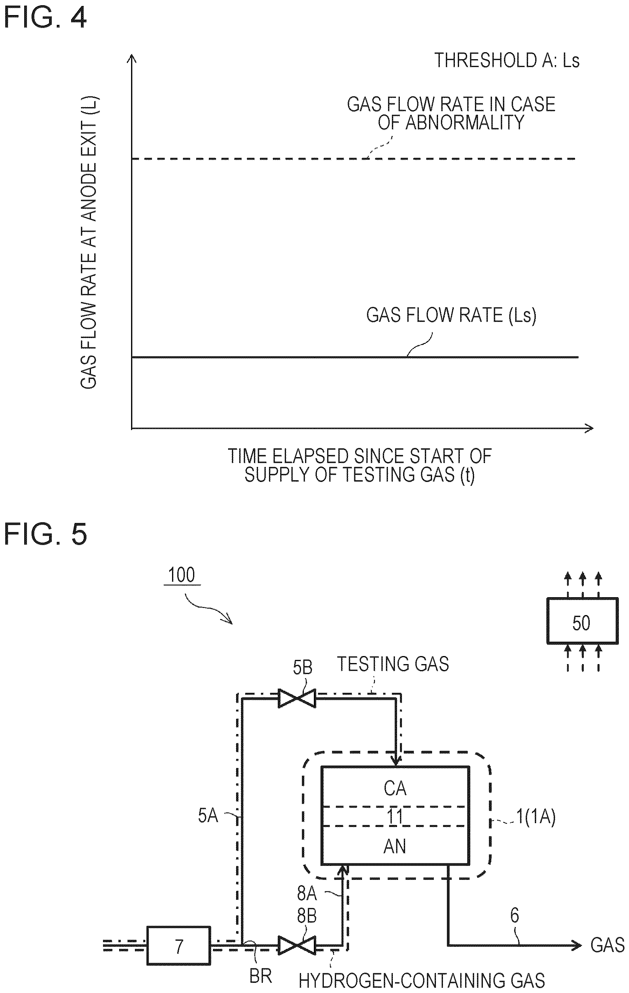

Here, the threshold A (Ls) in Fig. 4 is a reference value appropriately set for finding out the presence of breakage of the electrolytic film 11, which can be determined by using a measurement value with the above-mentioned flowmeter in the normal case without breakage of the electrolytic film 11, for example. The detailed configuration of the controller 50 is the same as that of the first embodiment and explanations will therefore be omitted.

[Operation]

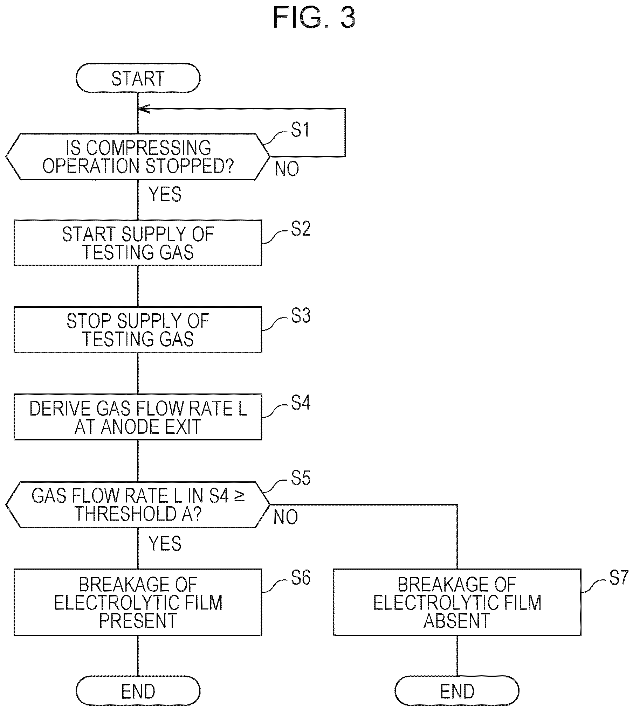

Fig. 3 is a flowchart illustrating an example of an operation of the compression apparatus of the second embodiment. The operation illustrated in Fig. 3 may be carried out, for example, by causing the arithmetic circuit of the controller 50 to read the control program out of the storage circuit of the controller 50. However, it is not always essential to carry out this operation by using the controller 50. An operator may carry out part of the operation. The following example will describe a case of controlling the operation with the controller 50.

When the compressing operation of the compression apparatus 100 is shutdown in step S1 (in the case of "Yes" in step S1), the inspection of the electrochemical hydrogen pump 1A to be described below is carried out in the shutdown of the compressing operation of the compression apparatus 100.

First, the supply of the testing gas to the cathode CA is started in step S2. For example, a valve provided to the testing gas supply channel 5 is opened, whereby an appropriate amount of the testing gas is supplied to the cathode CA only for a predetermined time period.

Then, in step S3, the supply of the testing gas to the cathode CA is shutdown. For example, the valve provided to the testing gas supply channel 5 is closed.

Next, in step S4, after supplying the testing gas to the cathode CA, the gas flow rate L passing through the exit of the anode AN is derived by using the flowmeter provided at the exit of the anode AN.

Then, in step S5, a determination is made as to whether or not the gas flow rate L in step S4 is greater than or equal to the threshold A (Ls).

In the where the gas flow rate L in step S4 is greater than or equal to the threshold A (Ls) in step S5 as indicated with a dotted line in Fig. 4 (in the case of "Yes" in step S5), breakage of the electrolytic film 11 is determined to be present in step S6.

In the case where the gas flow rate L in step S4 is not greater than or equal to the threshold A (Ls) in step S5 (in the case of "No" in step S5), breakage of the electrolytic film 11 is determined to be absent in step S7.

The above-mentioned inspection of the electrochemical hydrogen pump 1A is exemplary and the present disclosure is not limited to this example. For instance, the above-described inspection of the electrochemical hydrogen pump 1A is carried out in the shutdown of the compressing operation of the compression apparatus 100. Instead, the above-described inspection may be carried out in the startup of the compressing operation of the compression apparatus 100. Meanwhile, the above-described inspection determines the presence of breakage of the electrolytic film 11 by using the flowmeter. Instead, the presence of breakage of the electrolytic film 11 may be determined by using the gas sensor.

The gas flow rate L at the exit of the anode AN after supplying the testing gas to the cathode CA in the abnormal case with breakage of the electrolytic film 11 is more likely to be larger than the above-mentioned gas flow rate L in the normal case without breakage of the electrolytic film 11. Accordingly, the compression apparatus 100 of the present embodiment can appropriately determine the abnormality of the electrochemical hydrogen pump 1A based on the comparison between the gas flow rate L at the exit of the anode AN after supplying the testing gas to the cathode CA and the threshold A (Ls) by setting the threshold A (Ls) to a desired value.

The compression apparatus 100 of the present embodiment may be the same as the compression apparatus 100 of any one of the first embodiment as well as the first example and the second example of the first embodiment except for the above-described features.

(Modified example)

The compression apparatus 100 of the present modified example is the same as the compression apparatus 100 of the second embodiment except for a gas flow channel configuration to be described below.

Fig. 5 is a diagram illustrating an example of a compression apparatus of the modified example of the second embodiment.

In the example illustrated in Fig. 5, the compression apparatus 100 of the present embodiment includes the electrochemical hydrogen pump 1A, a testing gas supply channel 5A, a second valve 5B, an anode supply channel 8A, a first valve 8B, the anode discharge channel 6, a hydrogen-containing gas supplier 7, and the controller 50. Here, the configuration of the electrochemical hydrogen pump 1A is the same as that of the first embodiment and explanations will therefore be omitted. Meanwhile, the configuration of the anode discharge channel 6 is the same as that of the second embodiment and explanations will therefore be omitted.

The hydrogen-containing gas supplier 7 is a device provided to the anode supply channel 8A and configured to supply the hydrogen-containing gas to the anode AN of the electrochemical hydrogen pump 1A as indicated with a dotted line in Fig. 5. The hydrogen-containing gas supplier 7 may have any configuration as long as the hydrogen-containing gas supplier 7 can supply the hydrogen-containing gas to the anode AN of the electrochemical hydrogen pump 1A. A pump can be cited as an example of the hydrogen-containing gas supplier 7. However, the hydrogen-containing gas supplier 7 is not limited thereto.

Here, as illustrated in Fig. 5, the testing gas supply channel 5A is a flow channel which is branched off the anode supply channel 8A between the hydrogen-containing gas supplier 7 and the first valve 8B and configured to supply the testing gas to the cathode CA of the electrochemical hydrogen pump 1A. To be more precise, an upstream end of the testing gas supply channel 5A is connected to the anode supply channel 8A at a branching location BR. Then, the testing gas supply channel 5A is extended so as to communicate with the cathode CA of the electrochemical hydrogen pump 1A. A downstream end of the testing gas supply channel 5A may be connected to any location as long as it is the location communicating with the cathode CA of the electrochemical hydrogen pump 1A. For example, in the case where the electrochemical hydrogen pump 1A includes the above-described stack, the downstream end of the testing gas supply channel 5A may communicate with the manifold for outputting hydrogen.

As described above, in the compression apparatus 100 of the present modified example, the hydrogen-containing gas supplier 7 provided to the compression apparatus 100 is used as the testing gas supplier. In this case, the hydrogen-containing gas is used as the testing gas. That is to say, the hydrogen-containing gas supplier 7 is a device provided to the anode supply channel 8A and configured to supply the hydrogen-containing gas as the testing gas to the cathode CA of the electrochemical hydrogen pump 1A as indicated with a dash-dotted line in Fig. 5.

Accordingly, the compression apparatus 100 of the present modified example can reduce the number of components as compared to the case of using an external device provided outside of the compression apparatus 100 as the testing gas supplier.

Here, the first valve 8B is a valve provided to the anode supply channel 8A located downstream of the branching location BR and configured to open and close the anode supply channel 8A. The second valve 5B is a valve provided to the testing gas supply channel 5A and configured to open and close the testing gas supply channel 5A. That is to say, when the inspection of the electrochemical hydrogen pump 1A is carried out, the first valve 8B is closed while the second valve 5B is opened.

The first valve 8B and the second valve 5B may have any configurations as long as the values can open and close the anode supply channel 8A and the testing gas supply channel 5A.

On-off valves and the like can be cited as examples of the first valve 8B and the second valve 5B. A drive vale driven by using nitrogen gas or air, an electromagnetic valve, and the like can be used as such an on-off valve, for example. However, the valves are not limited thereto.

The above-described gas flow channel configuration of the compression apparatus 100 is exemplary and the gas flow channel configuration is not limited to this example. For instance, in the case where the compression apparatus 100 is a water electrolysis apparatus, a water supplier provided to the water electrolysis apparatus can be used as the testing gas supplier. In this case, a tank storing an appropriate testing gas is connected to the water supplier when the inspection of the compressor 1 is carried out. In the meantime, a three-way valve provided at the branching location BR can also be used instead of the first valve 8B and the second valve 5B.

The operation and effects exerted by the compression apparatus 100 of the present modified example are the same as the operation and effects exerted by the compression apparatus 100 of the second embodiment, and explanations will therefore be omitted.

The compression apparatus 100 of the present modified example may be the same as the compression apparatus 100 of any one of the first embodiment, the first example and the second example of the first embodiment, and the second embodiment except for the above-described features.

(Third embodiment)

[Apparatus configuration]

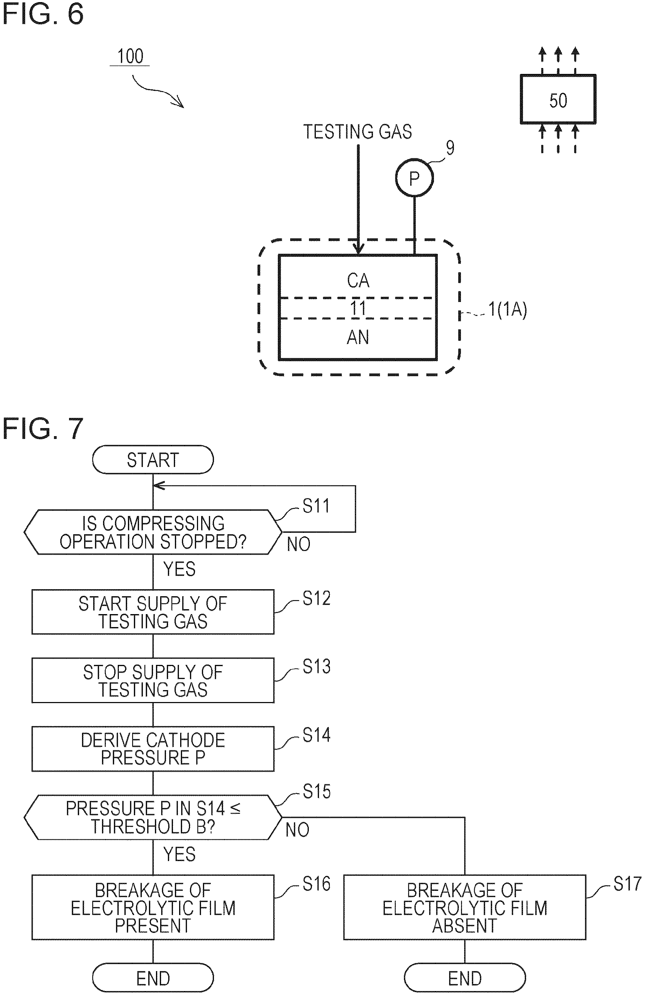

Fig. 6 is a diagram illustrating an example of a compression apparatus of a third embodiment.

In the example illustrated in Fig. 6, the compression apparatus 100 of the present embodiment includes the electrochemical hydrogen pump 1A, a manometer 9, and the controller 50. Here, the configuration of the electrochemical hydrogen pump 1A is the same as that of the first embodiment and explanations will therefore be omitted.

The manometer 9 is a device that detects the pressure at the cathode CA of the electrochemical hydrogen pump 1A. The manometer 9 may have any configuration as long as the manometer 9 can detect the pressure at the cathode CA of the electrochemical hydrogen pump 1A. For example, the manometer 9 may be configured to detect a pressure inside a gas flow channel that communicates with the cathode CA.

The controller 50 determines an abnormality when the pressure at the cathode CA after supplying the testing gas to the cathode CA is less than or equal to a threshold B.

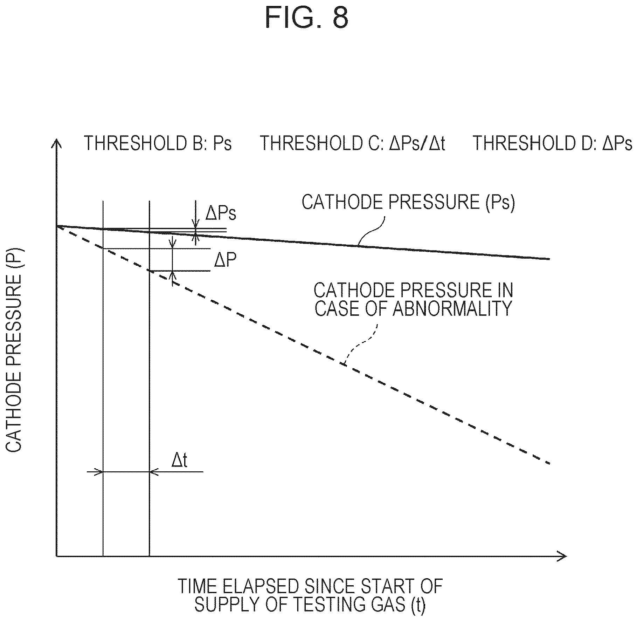

Here, the threshold B (Ps) in Fig. 8 is a reference value appropriately set for finding out the presence of breakage of the electrolytic film 11, which can be determined by using a measurement value with the manometer 9 in the normal case without breakage of the electrolytic film 11, for example. The detailed configuration of the controller 50 is the same as that of the first embodiment and explanations will therefore be omitted.

[Operation]

Fig. 7 is a flowchart illustrating an example of an operation of the compression apparatus of the third embodiment. The operation illustrated in Fig. 7 may be carried out, for example, by causing the arithmetic circuit of the controller 50 to read the control program out of the storage circuit of the controller 50. However, it is not always essential to carry out this operation by using the controller 50. An operator may carry out part of the operation. The following example will describe a case of controlling the operation with the controller 50.

When the compressing operation of the compression apparatus 100 is shutdown in step S11 (in the case of "Yes" in step S11), the inspection of the electrochemical hydrogen pump 1A to be described below is carried out in the shutdown of the compressing operation of the compression apparatus 100. Note that step S12 and step S13 are the same as step S2 and step S3 in Fig. 3, respectively, and explanations will therefore be omitted.

In step S14, after supplying the testing gas to the cathode CA, a pressure P at the cathode CA is derived by using the manometer 9.

Then, in step S15, a determination is made as to whether or not the pressure P in step S14 is less than or equal to the threshold B (Ps).

In the where the pressure P in step S14 is less than or equal to the threshold B (Ps) in step S15 as indicated with a dotted line in Fig. 8 (in the case of "Yes" in step S15), breakage of the electrolytic film 11 is determined to be present in step S16.

In the case where the pressure P in step S14 is not less than or equal to the threshold B (Ps) in step S15 (in the case of "No" in step S15), breakage of the electrolytic film 11 is determined to be absent in step S17.

The above-mentioned inspection of the electrochemical hydrogen pump 1A is exemplary and the present disclosure is not limited to this example. For instance, the above-described inspection of the electrochemical hydrogen pump 1A is carried out in the shutdown of the compressing operation of the compression apparatus 100. Instead, the above-described inspection may be carried out in the startup of the compressing operation of the compression apparatus 100.

The pressure P at the cathode CA after supplying the testing gas to the cathode CA in the abnormal case with breakage of the electrolytic film 11 is more likely to be smaller than the above-mentioned pressure P at the cathode CA in the normal case without breakage of the electrolytic film 11. Accordingly, the compression apparatus 100 of the present embodiment can appropriately determine the abnormality of the electrochemical hydrogen pump 1A based on the comparison between the pressure P at the cathode after supplying the testing gas to the cathode CA and the threshold B (Ps) by setting the threshold B (Ps) to a desired value.

The compression apparatus 100 of the present embodiment may be the same as the compression apparatus 100 of any one of the first embodiment, the first example and the second example of the first embodiment, the second embodiment, and the modified example of the second embodiment except for the above-described features.

(First modified example)

The compression apparatus 100 of the present modified example is the same as the compression apparatus 100 of the third embodiment except for contents of control by the controller 50 to be described below.

The controller 50 determines an abnormality when a rate of reduction in pressure at the cathode CA after supplying the testing gas to the cathode CA is greater than or equal to a threshold C. That is to say, the "threshold C" corresponds to an example of a "fourth threshold" of the present disclosure. Here, the "rate of reduction in pressure at the cathode CA" can be expressed as a rate of reduction ($\Delta P/\Delta t$) of the pressure (P) at the cathode CA in unit time ($\Delta t$) after supplying the testing gas to the cathode CA, for example. Accordingly, the present modified example will describe a case of expressing the "rate of reduction in pressure at the cathode CA" with the aforementioned amount of change ($\Delta P/\Delta t$).

Here, the threshold C ($\Delta Ps/\Delta t$) in Fig. 8 is a reference value appropriately set for finding out the presence of breakage of the electrolytic film 11, which can be determined by using a measurement value with the manometer 9 in the normal case without breakage of the electrolytic film 11, for example. The detailed configuration of the controller 50 is the same as that of the first embodiment and explanations will therefore be omitted.

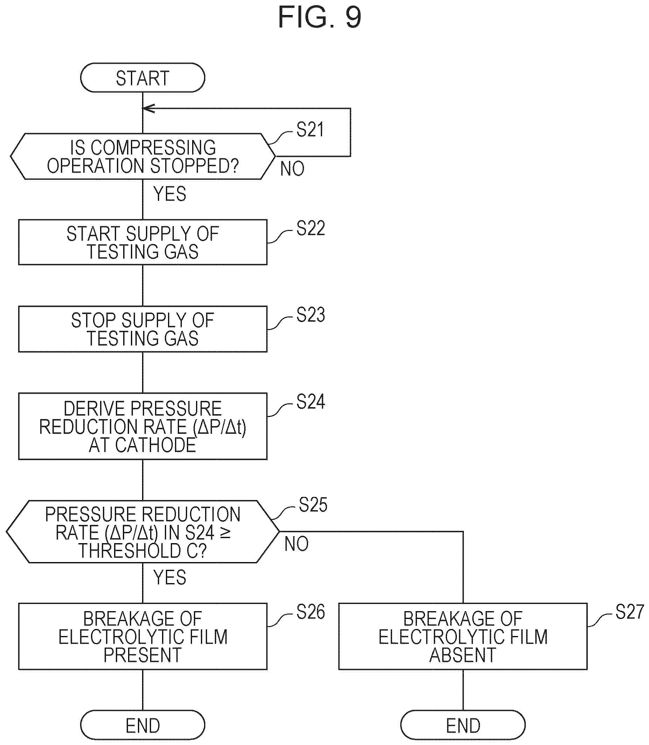

Fig. 9 is a flowchart illustrating an example of an operation of the compression apparatus of the first modified example of the third embodiment. The operation illustrated in Fig. 9 may be carried out, for example, by causing the arithmetic circuit of the controller 50 to read the control program out of the storage circuit of the controller 50. However, it is not always essential to carry out this operation by using the controller 50. An operator may carry out part of the operation. The following example will describe a case of controlling the operation with the controller 50.

When the compressing operation of the compression apparatus 100 is shutdown in step S21 (in the case of "Yes" in step S21), the inspection of the electrochemical hydrogen pump 1A to be described below is carried out in the shutdown of the compressing operation of the compression apparatus 100. Note that step S22 and step S23 are the same as step S2 and step S3 in Fig. 3, respectively, and explanations will therefore be omitted.

In step S24, after supplying the testing gas to the cathode CA, a rate of reduction in pressure ($\Delta P/\Delta t$) at the cathode CA is derived by using the manometer 9.

Then, in step S25, a determination is made as to whether or not the rate of reduction in pressure ($\Delta P/\Delta t$) in step S24 is greater than or equal to the threshold C ($\Delta Ps/\Delta t$).

In the where the rate of reduction in pressure ($\Delta P/\Delta t$) in step S24 is greater than or equal to the threshold C ($\Delta Ps/\Delta t$) in step S25 as indicated with a dotted line in Fig. 8 (in the case of "Yes" in step S25), breakage of the electrolytic film 11 is determined to be present in step S26.

In the where the rate of reduction in pressure ($\Delta P/\Delta t$) in step S24 is not greater than or equal to the threshold C ($\Delta Ps/\Delta t$) in step S25 (in the case of "No" in step S25), breakage of the electrolytic film 11 is determined to be absent in step S27.

The above-mentioned inspection of the electrochemical hydrogen pump 1A is exemplary and the present disclosure is not limited to this example. For instance, the above-described inspection of the electrochemical hydrogen pump 1A is carried out in the shutdown of the compressing operation of the compression apparatus 100. Instead, the above-described inspection may be carried out in the startup of the compressing operation of the compression apparatus 100.

The rate of reduction in pressure ($\Delta P/\Delta t$) at the cathode CA after supplying the testing gas to the cathode CA in the abnormal case with breakage of the electrolytic film 11 is more likely to be larger than the rate of reduction in pressure ($\Delta P/\Delta t$) at the cathode CA in the normal case without breakage of the electrolytic film 11. Accordingly, the compression apparatus 100 of the present embodiment can appropriately determine the abnormality of the electrochemical hydrogen pump 1A based on the comparison between the rate of reduction in pressure ($\Delta P/\Delta t$) at the cathode after supplying the testing gas to the cathode CA with the threshold C ($\Delta Ps/\Delta t$) by setting the threshold C ($\Delta Ps/\Delta t$) to a desired value.

The compression apparatus 100 of the present embodiment may be the same as the compression apparatus 100 of any one of the first embodiment, the first example and the second example of the first embodiment, the second embodiment, the modified example of the second embodiment, and the third embodiment except for the above-described features.

(Second modified example)

The compression apparatus 100 of the present modified example is the same as the compression apparatus 100 of the third embodiment except for contents of control by the controller 50 to be described below.

The controller 50 determines an abnormality when the reduction in pressure at the cathode CA after supplying the testing gas to the cathode CA is greater than or equal to a threshold D. That is to say, the "threshold D" corresponds to an example of a "third threshold" of the present disclosure. Here, the "reduction in pressure at the cathode CA" can be expressed as a difference ($\Delta P$) in pressure (P) at the cathode CA in a predetermined time period ($\Delta t$) after completion of supplying the testing gas to the cathode CA, for example. Accordingly, the present modified example will describe a case of expressing the "reduction in pressure at the cathode CA" with the aforementioned amount of change ($\Delta P$).

Here, the threshold D ($\Delta Ps$) in Fig. 8 is a reference value appropriately set for finding out the presence of breakage of the electrolytic film 11, which can be determined by using a measurement value with the manometer 9 in the normal case without breakage of the electrolytic film 11, for example. The detailed configuration of the controller 50 is the same as that of the first embodiment and explanations will therefore be omitted.

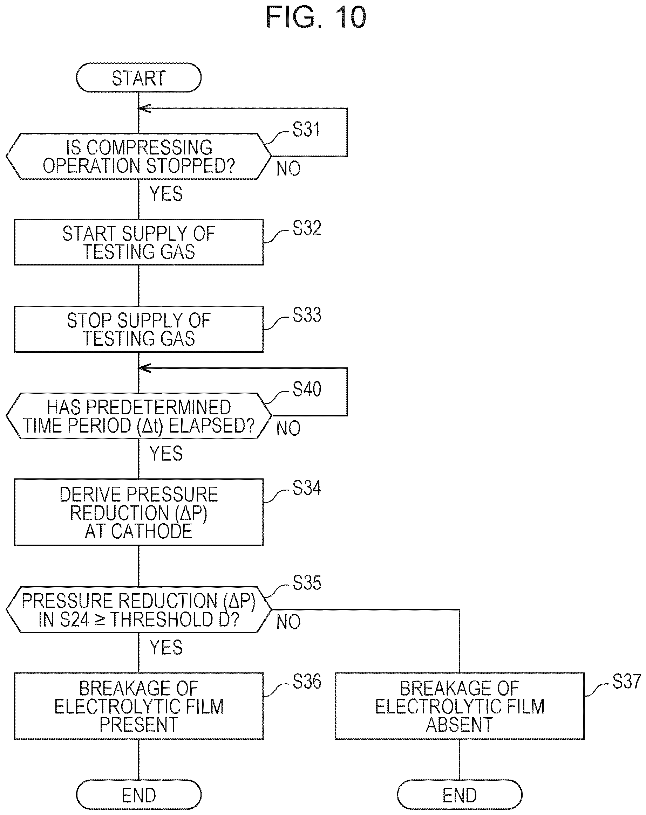

Fig. 10 is a flowchart illustrating an example of an operation of the compression apparatus of the second modified example of the third embodiment. The operation illustrated in Fig. 10 may be carried out, for example, by causing the arithmetic circuit of the controller 50 to read the control program out of the storage circuit of the controller 50. However, it is not always essential to carry out this operation by using the controller 50. An operator may carry out part of the operation. The following example will describe a case of controlling the operation with the controller 50.

When the compressing operation of the compression apparatus 100 is shutdown in step S31 (in the case of "Yes" in step S31), the inspection of the electrochemical hydrogen pump 1A to be described below is carried out in the shutdown of the compressing operation of the compression apparatus 100. Note that step S32 and step S33 are the same as step S2 and step S3 in Fig. 3, respectively, and explanations will therefore be omitted.

In step S40, a determination is made as to whether or not the predetermined time period ($\Delta t$) has elapsed.

In the case where the predetermined time period ($\Delta t$) has not elapsed yet in step S40 (in the case of "No" in step S40), the operation in step S40 is executed again.

The operation proceeds to the next step in the case where the predetermined time period ($\Delta t$) has elapsed in step S40 (in the case of "Yes" in step S40). In step S34, the reduction in pressure ($\Delta P$) at the cathode CA in the predetermined time period ($\Delta t$) after completion of supplying the testing gas to the cathode CA is derived by using the manometer 9. To be more precise, the value of the reduction in pressure ($\Delta P$) is equivalent to the difference between the pressure immediately after shutdown of the supply of the testing gas to the cathode (CA) in step S33 and the pressure after the lapse of the predetermined time period ($\Delta t$) from step S33 in step S40.

Next, in step S35, a determination is made as to whether or not the reduction in pressure ($\Delta P$) in step S34 is greater than or equal to the threshold D ($\Delta Ps$).

In the where the reduction in pressure ($\Delta P$) in step S34 is greater than or equal to the threshold D ($\Delta Ps$) in step S35 as indicated with a dotted line in Fig. 8 (in the case of "Yes" in step S35), breakage of the electrolytic film 11 is determined to be present in step S36.

In the where the reduction in pressure ($\Delta P$) in step S34 is not greater than or equal to the threshold D ($\Delta Ps$) in step S35 (in the case of "No" in step S35), breakage of the electrolytic film 11 is determined to be absent in step S37.

The above-mentioned inspection of the electrochemical hydrogen pump 1A is exemplary and the present disclosure is not limited to this example. For instance, the above-described inspection of the electrochemical hydrogen pump 1A is carried out in the shutdown of the compressing operation of the compression apparatus 100. Instead, the above-described inspection may be carried out in the startup of the compressing operation of the compression apparatus 100.

The reduction in pressure ($\Delta P$) at the cathode CA after supplying the testing gas to the cathode CA in the abnormal case with breakage of the electrolytic film 11 is more likely to be larger than the reduction in pressure ($\Delta P$) at the cathode CA in the normal case without breakage of the electrolytic film 11. Accordingly, the compression apparatus 100 of the present embodiment can appropriately determine the abnormality of the electrochemical hydrogen pump 1A based on the comparison between the reduction in pressure ($\Delta P$) at the cathode after supplying the testing gas to the cathode CA and the threshold D ($\Delta Ps$) by setting the threshold D ($\Delta Ps$) to a desired value.

The compression apparatus 100 of the present embodiment may be the same as the compression apparatus 100 of any one of the first embodiment, the first example and the second example of the first embodiment, the second embodiment, the modified example of the second embodiment, the third embodiment, and the first modified example of the third embodiment except for the above-described features.

(Fourth embodiment)

The compression apparatus 100 of the present embodiment is the same as the compression apparatus 100 of the first embodiment except for a method of manufacturing an electrochemical cell 1B to be described below.

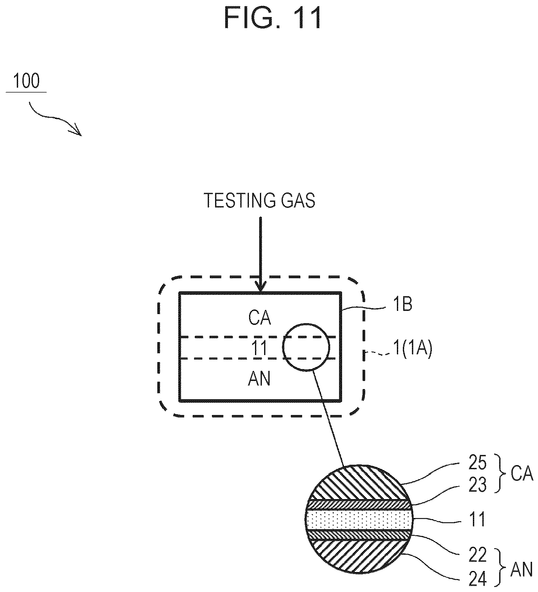

Fig. 11 is a diagram for explaining a method of manufacturing a compression apparatus of a fourth embodiment.

In the compression apparatus 100 of the present embodiment, an inspection of the electrochemical hydrogen pump 1A is carried out as described below in a manufacturing process before factory shipment of the compression apparatus 100.

First, a laminated body is fabricated by laminating electrochemical cells 1B each including the electrolytic film 11, the anode AN provided to one of principal surfaces of the electrolytic film 11, and the cathode CA provided to another one of the principal surfaces of the electrolytic film 11. Although only one electrochemical cell 1B is illustrated in Fig. 10, the above-mentioned laminated body mostly includes about 10 to 200 electrochemical cells 1B.

Next, the testing gas is supplied to the cathode CA, and an abnormality is determined based on the gas flow rate at the exit of the anode AN or the pressure at the cathode CA after supplying the testing gas. In this instance, a controller for determining the abnormality in the laminated body is an external device provided outside of the compression apparatus 100. Nonetheless, this controller may be built in the compression apparatus 100 instead. A detailed configuration of the controller and the inspection of the electrochemical hydrogen pump executed by this controller are the same as those of the first embodiment, and explanations will therefore be omitted.

The operation and effects exerted by the method of manufacturing the compression apparatus 100 of the present embodiment are the same as the operation and effects exerted by the compression apparatus 100 of the first embodiment, and explanations will therefore be omitted.

The method of manufacturing the compression apparatus 100 of the present embodiment may be the same as any one of the first embodiment, the first example and the second example of the first embodiment, the second embodiment, the modified example of the second embodiment, the third embodiment, and the first modified example and the second modified example of the third embodiment except for the above-described features.

Here, any of the first embodiment, the first example and the second example of the first embodiment, the second embodiment, the modified example of the second embodiment, the third embodiment, the first modified example and the second modified example of the third embodiment, and the fourth embodiment may be combined with each other unless such a combination does not eliminate each other. Meanwhile, from the description made above, numerous modifications and other embodiments of the present disclosure are obvious to those skilled in the art. Accordingly, the above description should be interpreted solely as exemplary, and are provided for the purpose of teaching those skilled in the art the best modes to carry out the present disclosure. It is possible to substantially modify details of the structures and/or functions of the present disclosure without departing from the gist thereof.

Industrial Applicability

An aspect of the present disclosure is applicable to a compression apparatus, a method of operation a compression apparatus, and a method of manufacturing a compression apparatus, which enable determination of an abnormality of a compressor more appropriately than the related art.

Reference Signs List

1 compressor
1A electrochemical hydrogen pump
1B electrochemical cell
5 testing gas supply channel
5A testing gas supply channel
5B second valve
6 anode discharge channel
7 hydrogen-containing gas supplier
8 anode supply channel
8A anode supply channel
8B first valve
9 manometer
11 electrolytic film
22 anode catalyst layer
23 cathode catalyst layer
24 anode gas diffusion layer
25 cathode gas diffusion layer
50 controller
100 compression apparatus
A threshold
AN anode
B threshold
BR branching location
C threshold
CA cathode
D threshold
L gas flow rate
P pressure

**Claims**

1. A compression apparatus comprising:

   a compressor that generates compressed hydrogen at a cathode by an electrolysis of water or by oxidation and reduction of hydrogen generated by applying a voltage between an anode and the cathode having flexural rigidity lower than flexural rigidity of the anode; and
   a controller that, in startup or in shutdown, determines an abnormality based on a gas flow rate at an exit of the anode or a pressure at the cathode after supplying a testing gas from a testing gas supplier to the cathode.

2. The compression apparatus according to claim 1, wherein a supply pressure of the testing gas from the testing gas supplier is higher than a supply pressure of an anode fluid in a generating operation of compressed hydrogen.

3. The compression apparatus according to claim 1 or 2, wherein a supply pressure of the testing gas from the testing gas supplier is higher than an upper limit of a supply pressure of an anode fluid in a generating operation of compressed hydrogen.

4. The compression apparatus according to any one of claims 1 to 3, wherein flexural rigidity of a cathode gas diffusion layer included in the cathode is lower than flexural rigidity of an anode gas diffusion layer included in the anode.

5. The compression apparatus according to any one of claims 1 to 4, wherein the controller determines the abnormality when the gas flow rate at the exit of the anode after supplying the testing gas to the cathode is greater than or equal to a first threshold.

6. The compression apparatus according to any one of claims 1 to 5, wherein the controller determines the abnormality when the pressure at the cathode after supplying the testing gas to the cathode is less than or equal to a second threshold.

7. The compression apparatus according to any one of claims 1 to 6, wherein the controller determines the abnormality when reduction in pressure at the cathode after supplying the testing gas to the cathode is greater than or equal to a third threshold.

8. The compression apparatus according to any one of claims 1 to 7, wherein the controller determines the abnormality when a rate of reduction in pressure at the cathode after supplying the testing gas to the cathode is greater than or equal to a fourth threshold.

9. A method of operating a compression apparatus, comprising:

   generating compressed hydrogen at a cathode by an electrolysis of water or by oxidation and reduction of hydrogen generated by applying a voltage between an anode and the cathode having flexural rigidity lower than flexural rigidity of the anode; and
   in startup or in shutdown, supplying a testing gas to the cathode and determining an abnormality based on a gas flow rate at an exit of the anode or a pressure at the cathode after supplying the testing gas.

10. A method of manufacturing a compression apparatus, comprising:

    fabricating a laminated body by laminating electrochemical cells each including an electrolytic film, an anode provided to one of principal surfaces of the electrolytic film, and a cathode provided to another one of the principal surfaces of the electrolytic film; and
    supplying a testing gas to the cathode and determining an abnormality based on a gas flow rate at an exit of the anode or a pressure at the cathode after supplying the testing gas.

**Amended claims under Art. 19.1 PCT**

1. A compression apparatus comprising:

   a compressor that generates compressed hydrogen at a cathode by an electrolysis of water or by oxidation and reduction of hydrogen generated by applying a voltage between an anode and the cathode having flexural rigidity lower than flexural rigidity of the anode; and
a controller that, in startup or in shutdown, determines an abnormality based on a gas flow rate at an exit of the anode or a pressure at the cathode after supplying a testing gas from a testing gas supplier to the cathode.

2. The compression apparatus according to claim 1, wherein a supply pressure of the testing gas from the testing gas supplier is higher than a supply pressure of an anode fluid in a generating operation of compressed hydrogen.

3. The compression apparatus according to claim 1 or 2, wherein a supply pressure of the testing gas from the testing gas supplier is higher than an upper limit of a supply pressure of an anode fluid in a generating operation of compressed hydrogen.

4. The compression apparatus according to any one of claims 1 to 3, wherein flexural rigidity of a cathode gas diffusion layer included in the cathode is lower than flexural rigidity of an anode gas diffusion layer included in the anode.

5. The compression apparatus according to any one of claims 1 to 4, wherein the controller determines the abnormality when the gas flow rate at the exit of the anode after supplying the testing gas to the cathode is greater than or equal to a first threshold.

6. The compression apparatus according to any one of claims 1 to 5, wherein the controller determines the abnormality when the pressure at the cathode after supplying the testing gas to the cathode is less than or equal to a second threshold.

7. The compression apparatus according to any one of claims 1 to 6, wherein the controller determines the abnormality when reduction in pressure at the cathode after supplying the testing gas to the cathode is greater than or equal to a third threshold.

8. The compression apparatus according to any one of claims 1 to 7, wherein the controller determines the abnormality when a rate of reduction in pressure at the cathode after supplying the testing gas to the cathode is greater than or equal to a fourth threshold.

9. A method of operating a compression apparatus, comprising:

generating compressed hydrogen at a cathode by an electrolysis of water or by oxidation and reduction of hydrogen generated by applying a voltage between an anode and the cathode having flexural rigidity lower than flexural rigidity of the anode; and
in startup or in shutdown, supplying a testing gas to the cathode and determining an abnormality based on a gas flow rate at an exit of the anode or a pressure at the cathode after supplying the testing gas.

10. A method of manufacturing a compression apparatus, comprising:

fabricating a laminated body by laminating electrochemical cells each including an electrolytic film, an anode provided to one of principal surfaces of the electrolytic film, and a cathode having flexural rigidity lower than flexural rigidity of the anode provided to another one of the principal surfaces of the electrolytic film; and
supplying a testing gas to the cathode and determining an abnormality based on a gas flow rate at an exit of the anode or a pressure at the cathode after supplying the testing gas.

## FIG. 1

## FIG. 2

# FIG. 3

```
                    ┌─────────────┐
                    │    START    │
                    └─────────────┘
                           │
                           ▼
              ┌─────────────────────────┐  S1
         ┌───<   IS COMPRESSING         >
         │    │  OPERATION STOPPED?     │  NO
         │    └─────────────────────────┘
         │              │ YES
         │              ▼
         │    ┌─────────────────────────┐  S2
         │    │   START SUPPLY OF        │
         │    │   TESTING GAS           │
         │    └─────────────────────────┘
         │              │
         │              ▼
         │    ┌─────────────────────────┐  S3
         │    │   STOP SUPPLY OF         │
         │    │   TESTING GAS           │
         │    └─────────────────────────┘
         │              │
         │              ▼
         │    ┌─────────────────────────┐  S4
         │    │  DERIVE GAS FLOW RATE L  │
         │    │  AT ANODE EXIT          │
         │    └─────────────────────────┘
         │              │
         │              ▼
              ┌─────────────────────────┐  S5
              <  GAS FLOW RATE L IN S4 ≥ >────────┐
              │  THRESHOLD A?           │  NO      │
              └─────────────────────────┘          │
                       │ YES                        │
                       ▼                            ▼
         ┌─────────────────────┐ S6    ┌─────────────────────┐ S7
         │   BREAKAGE OF        │       │   BREAKAGE OF        │
         │   ELECTROLYTIC FILM  │       │   ELECTROLYTIC FILM  │
         │   PRESENT            │       │   ABSENT            │
         └─────────────────────┘       └─────────────────────┘
                  │                              │
                  ▼                              ▼
            ┌──────────┐                   ┌──────────┐
            │   END    │                   │   END    │
            └──────────┘                   └──────────┘
```

## FIG. 4

THRESHOLD A: Ls

GAS FLOW RATE IN CASE
OF ABNORMALITY

GAS FLOW RATE (Ls)

GAS FLOW RATE AT ANODE EXIT (L)

TIME ELAPSED SINCE START OF
SUPPLY OF TESTING GAS (t)

## FIG. 5

100

50

5B    TESTING GAS

5A

CA

11        1(1A)

AN

8A
8B

7

6

BR    HYDROGEN-CONTAINING GAS    GAS

## FIG. 6

## FIG. 7

# FIG. 8

THRESHOLD B: Ps    THRESHOLD C: $\Delta Ps/\Delta t$    THRESHOLD D: $\Delta Ps$

CATHODE PRESSURE (Ps)

$\Delta Ps$

$\Delta P$

CATHODE PRESSURE IN CASE OF ABNORMALITY

$\Delta t$

CATHODE PRESSURE (P)

TIME ELAPSED SINCE START OF SUPPLY OF TESTING GAS (t)

# FIG. 9

START

IS COMPRESSING OPERATION STOPPED? — S21

NO

YES

START SUPPLY OF TESTING GAS — S22

STOP SUPPLY OF TESTING GAS — S23

DERIVE PRESSURE REDUCTION RATE ($\Delta P/\Delta t$) AT CATHODE — S24

PRESSURE REDUCTION RATE ($\Delta P/\Delta t$) IN S24 $\geq$ THRESHOLD C? — S25

NO

YES

BREAKAGE OF ELECTROLYTIC FILM PRESENT — S26

BREAKAGE OF ELECTROLYTIC FILM ABSENT — S27

END

END

# FIG. 10

START

S31 — IS COMPRESSING OPERATION STOPPED? — NO

YES

S32 — START SUPPLY OF TESTING GAS

S33 — STOP SUPPLY OF TESTING GAS

S40 — HAS PREDETERMINED TIME PERIOD ($\Delta t$) ELAPSED? — NO

YES

S34 — DERIVE PRESSURE REDUCTION ($\Delta P$) AT CATHODE

S35 — PRESSURE REDUCTION ($\Delta P$) IN S24 ≥ THRESHOLD D? — NO

YES

S36 — BREAKAGE OF ELECTROLYTIC FILM PRESENT

S37 — BREAKAGE OF ELECTROLYTIC FILM ABSENT

END

END

# FIG. 11

## INTERNATIONAL SEARCH REPORT

| | International application No. |
|---|---|
| | **PCT/JP2023/015261** |

### A. CLASSIFICATION OF SUBJECT MATTER

*C25B 1/02*(2006.01)i; *C25B 1/04*(2021.01)i; *C25B 9/00*(2021.01)i; *C25B 15/023*(2021.01)i
FI: C25B1/02; C25B15/023; C25B1/04; C25B9/00 A

According to International Patent Classification (IPC) or to both national classification and IPC

### B. FIELDS SEARCHED

Minimum documentation searched (classification system followed by classification symbols)

C25B1/02; C25B1/04; C25B9/00; C25B15/023

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-095953 A (PANASONIC IP MANAGEMENT CORP.) 21 June 2018 (2018-06-21) claims, paragraphs [0047], [0202]-[0219], fig. 17, 18 | 10 |
| Y | claims, paragraphs [0047], [0061], [0083]-[0089], [0202]-[0219], fig. 17, 18 | 1-9 |
| Y | JP 2015-530726 A (NUVERA FUEL CELLS, INC.) 15 October 2015 (2015-10-15) claims, paragraphs [0012]-[0014], [0029]-[0030], [0037] | 1-9 |
| A | | 10 |
| Y | JP 2005-276729 A (FUJI ELECTRIC HOLDINGS CO., LTD.) 06 October 2005 (2005-10-06) paragraph [0015], fig. 2 | 1-9 |
| A | | 10 |
| Y | JP 2015-072736 A (NISSAN MOTOR CO., LTD.) 16 April 2015 (2015-04-16) paragraphs [0011], [0089] | 1-9 |
| A | | 10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 534 725 A1**

## INTERNATIONAL SEARCH REPORT
### Information on patent family members

International application No.

**PCT/JP2023/015261**

| Patent document cited in search report | | | Publication date (day/month/year) | Patent family member(s) | | | Publication date (day/month/year) |
|---|---|---|---|---|---|---|---|
| JP | 2018-095953 | A | 21 June 2018 | US 2018/0166713 A1 claims, paragraphs [0047], [0061], [0083]-[0089], [0202]-[0219], fig. 17-18 EP 3336947 A1 | | | |
| JP | 2015-530726 | A | 15 October 2015 | WO 2014/055416 A1 claims, paragraphs [012]-[014], [040]-[041], [048] KR 10-2015-0067286 A | | | |
| JP | 2005-276729 | A | 06 October 2005 | (Family: none) | | | |
| JP | 2015-072736 | A | 16 April 2015 | (Family: none) | | | |

Form PCT/ISA/210 (patent family annex) (January 2015)

**REFERENCES CITED IN THE DESCRIPTION**

**Patent documents cited in the description**

- JP 6360061 B